## Europäisches Patentamt
## European Patent Office
## Office européen des brevets

(19)

(11) Veröffentlichungsnummer : **0 030 246**
**B1**

(12)

# EUROPÄISCHE PATENTSCHRIFT

(45) Veröffentlichungstag der Patentschrift :
26.01.83

(51) Int. Cl.³ : **E 06 B   3/66**

(21) Anmeldenummer : 79105001.6

(22) Anmeldetag : 07.12.79

(54) **Lichtdurchlässiges wärmedämmendes Verbundelement.**

(43) Veröffentlichungstag der Anmeldung :
**17.06.81 Patentblatt 81/24**

(45) Bekanntmachung des Hinweises auf die Patenterteilung : **26.01.83 Patentblatt 83/04**

(84) Benannte Vertragsstaaten :
**AT BE CH DE FR GB IT LU NL SE**

(56) Entgegenhaltungen :
**AT B 249 333**
**DE A 1 509 602**
**DE A 1 963 623**
**DE A 2 637 351**
**DE B 1 073 164**
**DE C 824 249**
**DE C 1 025 601**
**DE C 1 074 233**
**US A 3 226 460**

(73) Patentinhaber : OKALUXKapillarglas GmbH
D-8771 Altfeld (DE)

(72) Erfinder : Schmitt, Karl-Heinz
Plattenbergstrasse 7
D-8751 Kleinwallstadt (DE)

(74) Vertreter : Jaeger, Klaus, Dr. rer. nat. Dipl.-Chem.
et al
Jaeger, Grams & Pontani Patentanwälte Bergstrasse
48 1/2
D-8035 München-Gauting (DE)

### Lichtdurchlässiges wärmedämmendes Verbundelement

Die Erfindung betrifft ein lichtdurchlässiges wärmedämmendes Verbundelement der im Oberbegriff des Anspruchs 1 genannten Art.

Die Temperierung und Klimatisierung von Innenräumen, beispielsweise Wohnräumen, Arbeitsräumen oder Fabrikationsräumen, kostet Energie. Der für die Temperierung und Klimatisierung solcher Innenräume erforderliche Energiebedarf kann durch möglichst gute Wärmeisolierung des Innenraumes spürbar verringert werden. Bei Innenräumen, die durch Tageslicht beleuchtet werden, ist die Verglasung nach wie vor das schwächste Glied der Wärmeisolierung. Dies liegt daran, daß Lichtdurchlässigkeit und Wärmedämmung bei gleichzeitiger Lichtbeständigkeit Forderungen sind, die bislang von noch keinem bekannten Werkstoff gleichzeitig erfüllt werden.

Aus dem Firmenprospekt OKALUX ist ein lichtdurchlässiges wärmedämmendes Verbundelement bekannt, das aus zwei zueinander parallelen lichtdurchlässigen Glastafeln besteht, die zwischen sich sandwichartig eine Kunststoff-Kapillarplatte einschließen. Die Kapillarplatte besteht aus zahllosen im Querschnitt wabenartig zueinander angeordneten und miteinander verklebten oder verschweißten glasklaren Kunststoffkapillaren. Die Achse der Kapillarröhrchen steht senkrecht zur Ebene der Glastafeln. Mit diesen Verbundelementen werden bei einer Dicke von rund 20 mm Wärmedurchgangskoeffizienten (« k-Werte » ; im folgenden stets in der Einheit $W \cdot K^{-1} \cdot m^{-2}$ angegeben) im Bereich von ungefähr 2,0 bei einer Lichtdurchlässigkeit (nach DIN 5 036) von ungefähr 70 bis 80 % (einschließlich der Glastafeln) erhalten.

Nachteilig am bekannten Verbundelement ist seine aufwendige und kostenintensive Herstellung. Weiterhin sind die erzielbaren k-Werte noch nicht ganz zufriedenstellend.

Ein ähnlicher Aufbau eines lichtdurchlässigen wärmedämmenden Verbundelementes, wie es aus dem Firmenprospekt OKALUX bekannt ist, ist in der DE-C-824 249 beschrieben. Bei diesem bekannten Verbundelement sind zwischen den äußeren Tafeln lichtdurchlässige Röhrchen, deren Achsen im wesentlichen senkrecht zu den Flächen der Tafeln stehen, eingeschichtet. Bei exakter Ausrichtung der eingeschichteten Röhrchen bedeutet dies eine relativ kostenintensive Herstelltechnik. Zum anderen ist im Hinblick auf die mit diesem Verbundelement erreichte Lichtdurchlässigkeit und den Wärmedurchgangskoeffizienten des Verbundelementes für einen quantitativen Vergleich keine Aussage entnehmbar.

Der Erfindung liegt die Aufgabe zugrunde, ein lichtdurchlässiges und wärmedämmendes Verbundelement der eingangs genannten Art zu schaffen, das preiswerter herstellbar ist und bei mindestens vergleichbarer Lichtdurchlässigkeit eine verbesserte Wärmedämmung zeigt.

Zur Lösung dieser Aufgabe schafft die Erfindung ein Verbundelement der im Oberbegriff des Anspruchs 1 genannten Art, das erfindungsgemäß die im kennzeichnenden Teil des Anspruchs 1 genannten Merkmale aufweist.

Zwar ist es aus der DE-B-1 073 164 bekannt, bei einem lichtstreuenden Mehrschichtenglas eine auf die Verarbeitungsstärke zugeschnitte Kunststoffplatte aus einer an sich lichtundurchlässigen geschlossenzelligen Schaumstofftafel zu verwenden. Diese Schaumstofftafel wird bei dem bekannten Verfahren entsprechend dünn gewählt, damit die erwartete Lichtstreuung noch erreicht wird. Eine Verbesserung der Lichtdurchlässigkeit bei diesem bekannten Mehrschichtenglas durch einen besonderen Bearbeitungsschritt der Schaumstofftafel ist der Beschreibung jedoch nicht entnehmbar.

Der Grundgedanke der Erfindung liegt also darin, als Wärmedämmaterial zwischen den beiden durchsichtigen Scheiben, die las Glasscheiben oder Kunststoffscheiben ausgebildet sein können, ein an sich prinzipiell undurchsichtiges und nicht lichtdurchlässiges Material, nämlich einen geschlossenzelligen Schaumstoff, zu verwenden und diesen dadurch lichtdurchlässig zu gestalten, daß er mit beidseitig offenen durchgehenden Kanälen versehen wird. Diese Kanäle sind entweder durch eine fest mit der Schaumstofftafel verbundene dünne durchsichtige Kunststofffolie oder direkt durch die aufliegende Außenscheibe verschlossen. Auf diese Weise sind in den in der Schaumstofftafel ausgebildeten Kanälen kleinste abgeschlossene Lufträume ausgebildet, in denen praktisch keine Konvektion stattfindet. Diese Kanäle sind daher wärmedämmend, wenn auch nicht in dem Ausmaß wie der umgebende Schaumstoff, sind aber gleichzeitig, im Gegensatz zum umgebenden Schaumstoff, lichtdurchlässig.

Mit solchen Verbundelementen können bei einer Gesamtstärke von ungefähr 30 mm k-Werte von kleiner als 1 bei einer Lichtdurchlässigkeit von größer als 80 % erhalten werden.

Der eigentliche Vorteil des Verbundelementes der Erfindung liegt jedoch in seiner preiswerten Herstellbarkeit. Die Kanäle in den Schaumstofftafeln werden vorzugsweise durch Stanzen oder Bohren der auf die Verarbeitungsstärke zugeschnittenen Tafeln hergestellt. Alternativ können im Formwerkzeug oder nach kontinuierlichen Verfahren Blöcke oder Großprofile mit durchgehenden Kanälen hergestellt werden, wobei diese Blöcke oder Großprofile dann senkrecht zum Verlauf der Kanäle auf die jeweils benötigte Plattenstärke geschnitten werden. Beide Verfahrensweisen sind wesentlich kostengünstiger als die Herstellung der bekannten Kapillarplatte.

Im Verbundelement der Erfindung besteht die Schaumstofftafel vorzugsweise aus einem Hartschaumstoff, insbesondere aus einem weißen oder farblosen Kunststoff. Dabei ist jedoch zu beachten, daß selbst ein farbloser Kunststoff, wenn er verschäumt wird, bei einer Dicke von größer als ungefähr 5 mm praktisch lichtundurchlässig wird. Die Verwendung eines weißen oder farblosen Kunststoffs zur Herstellung der Schaumstofftafel, speziell der Hartschaumstofftafel, wird jedoch wegen der besseren Lichtreflexion in den Kanälen bevorzugt. Die Lichtdurchlässigkeit der Schaumstofftafel kann dadurch spürbar verbessert werden.

Das Verbundelement wird bestimmungsgemäß zur Raumverglasung verwendet. Es ist daher einer besonders intensiven Sonneneinstrahlung ausgesetzt. Der zur Herstellung der Schaumstofftafel verwendete Kunststoff muß daher in besonders hohem Maße lichtecht sein, darf sich also auch nach jahrelanger intensiver Sonnenbestrahlung nicht verfärben. Ein Kunststoff, der diese Anforderungen besonders gut erfüllt und daher vorzugsweise zur Herstellung der Verbundelemente eingesetzt wird, ist das Polymethacrylimid. Polymethacrylimid ist einfach zu einem außerordentlich gut wärmedämmenden rein weißen Hartschaumstoff zu verschäumen.

Die Lichtdurchlässigkeit des Verbundelementes kann dadurch verbessert werden, daß die Innenwände der Kanäle möglichst glatt ausgebildet sind, so daß das durch sie hindurchgehende Licht gut reflektiert wird. Dies kann bei Herstellung der Kanäle durch Bohren und Stanzen entweder durch eine Lackierung oder durch ein aufgeheiztes Stanzwerkzeug erfolgen, das die Innenwände der Kanäle unter Erweichung des Kunststoffes glättet.

Die Kanäle können im Querschnitt rund, oval, quadratisch oder polygonal ausgebildet sein. Die Kanäle können zylindrisch bzw. quaderförmig oder kegelförmig ausgebildet sein. Sie können senkrecht zur Hauptebene der Schaumstofftafel oder schräg zu dieser verlaufen.

Bei der Festlegung des lichten Querschnitts der Kanäle muß ein Kompromiß zwischen der Lichtdurchlässigkeit und der Wärmedämmung des Verbundelementes eingegangen werden. Je größer der lichte Querschnitt der Kanäle ist, desto besser wird die Lichtdurchlässigkeit und desto schlechter wird die Wärmedämmung, d.h. desto größer wird auch der k-Wert. Die besten Ergebnisse werden mit lichten Durchmessern im Bereich von ungefähr 1 bis 10 mm, insbesondere bei zylindrischen Kanälen mit lichten Durchmessern von 3 bis 6 mm, erhalten. Dabei sind die Kanäle im Querschnitt gleichmäßig über die Schaumstofftafel verteilt angeordnet, wobei die Verteilung in der Hauptebene der Schaumstofftafel sowohl quadratische als auch hexagonale Symmetrie aufweisen kann. Selbstverständlich können auch beliebige andere Verteilungen, insbesondere freie ornamentale Verteilungen mit unterschiedlichen lichten Querschnitten der einzelnen Kanäle vorgesehen sein.

Der Abstand zwischen den einzelnen Kanälen, also die Stärke des zwischen benachbarten Kanälen stehenbleibenden Schaumstoffsteges, wird möglichst gering gehalten und liegt vorzugsweise im Bereich von ungefähr 0,5 bis 3 mm.

Die Stärke der Schaumstofftafel richtet sich primär nach der vom fertigen Verbundelement geforderten Wärmedämmung. Sie liegt üblicherweise im Bereich zwischen 3 und 50 mm. Bei Stärken der Schaumstofftafel von über ungefähr 5 mm wird die Schaumstofftafel selbst vorzugsweise als Verbundelement ausgebildet. Zwei oder mehrere einzelne Schaumstofftafeln werden so übereinanderliegend angeordnet, daß ihre Kanäle koaxial zueinander angeordnet sind. Dabei brauchen jedoch die lichten Querschnitte der Kanäle in beiden Elementen der Kunststoffverbundtafel durchaus nicht immer übereinzustimmen. Zwischen je zwei solcher einen Verbund bildenden Schaumstofftafelementen ist eine dünne Glasscheibe oder eine dünne Kunststofffolie eingefügt, die die offenen Stirnseiten der Kanäle beider anliegenden Schaumstofftafelemente fest verschließt. Dadurch kann die Länge der Kanäle in den Schaumstofftafeln insbesondere bei größeren Tafelstärken wirksam unterteilt werden. Durch diese Unterteilung werden die Luftvolumina verkleinert, kann also die Konvektion in den Kanälen verringert und damit die Wärmedämmung im Kanalbereich spürbar verbessert werden.

Sowohl die in den Schaumstoffverbundtafeln eingefügten Folien oder Gläser als auch die diese Schaumstofftafeln außen gegebenenfalls abdeckenden lichtdurchlässigen Folien können in mannigfacher Weise modifiziert sein, beispielsweise als UV-Filter, Sonnenschutzfolien mit belichtungsabhängiger Durchlässigkeit oder einfach gefärbt ausgebildet sein. Durch solche Zwischenfolien kann auch die optische Streuung praktisch beliebig beeinflußt werden.

Das Verbundelement ist vorzugsweise rundum an seinem Rand versiegelt, beispielsweise mit einem Kitt oder Gießharz ausgegossen und/oder mit einem Rahmen eingefaßt, wie dies aus der Isolierglasherstellung an sich bekannt ist.

Die Erfindung ist im folgenden anhand eines Ausführungsbeispiels in Verbindung mit der Zeichnung näher erläutert. Es zeigt die einzige

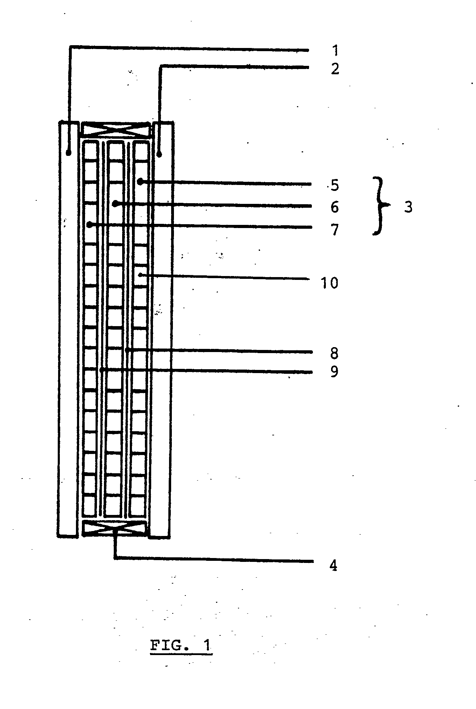

Figur 1 in schematischer Darstellung und im Querschnitt ein Verbundelement der Erfindung, bei dem die Schaumstofftafel selbst ebenfalls als Verbundelement ausgebildet ist.

Das in der Fig. 1 im Querschnitt schematisch dargestellte lichtdurchlässige und wärmedämmende Verbundelement besteht aus zwei Isolierglasscheiben 1, 2, zwischen die sandwichartig eine Schaumstofftafel 3 eingeschlossen ist. Die Glastafeln 1, 2 stehen an allen Rändern rundum geringfügig über die Ränder der Schaumstofftafel 3 über. Die dadurch gebildete rundumlaufende U-profilartige Rinne ist durch einen wärmedämmenden Isolierkitt 4 ausgefüllt.

Die Schaumstofftafel ist als Verbundelement aus drei gleichstarken Schaumstofftafelementen 5, 6, 7 aufgebaut. Zwischen jeweils zwei dieser Schaumstofftafelemente ist eine dünne lichtdurchlässige Kunststofffolie 8, 9 eingefügt. Die Kunststofffolien 8, 9 sind mit den Schaumstofftafelelementen 5, 6, 7 thermisch verklebt bzw.

verschweißt.

Die Schaumstofftafelelemente 5, 6, 7 sind dicht nebeneinanderliegend mit in jedem Element jeweils durchgehenden Stanzlöchern 10 versehen. Die Stanzlöcher haben einen Durchmesser von 5 mm und sind unter Bildung eines Wabenmusters in der zur Darstellungsebene der Figur 1 senkrechten Fläche angeordnet. Die zwischen den einzelnen Kanälen oder Stanzlöchern 10 stehenbleibenden Stege haben eine kleinste Breite von 1 mm. Die Stanzlöcher 10 in den einzelnen Schaumstofftafelelementen 5, 6, 7 sind koaxial zueinander ausgerichtet.

Die Schaumstofftafelelemente 5, 6, 7 bestehen aus einem geschlossenzelligen Polymethacrylimid-Hartschaumstoff.

Das lichtdurchlässige und wärmedämmende Verbundelement hat eine Gesamtstärke von ca. 30 mm. Dieses Verbundelement hat einen k-Wert von kleiner als $1 \, W \cdot K^{-1} \cdot m^{-2}$ und eine Lichtdurchlässigkeit von über 85 %. Auch bei einer Innentemperatur von 80 °C wird bei intensiver Dauerbelichtung kein Gilben und keine Verminderung des anfänglichen k-Wertes beobachtet.

Statt der Kunststofffolien 8, 9 können auch lichtdurchlässige Glasfaservliese als Zwischenlagen für die Schaumstoffplatte verwendet werden.

## Ansprüche

1. Lichtdurchlässiges wärmedämmendes Verbundelement, bestehend aus

   1.1 zwei zueinander parallelen lichtdurchlässigen Scheiben (1, 2), deren Ränder miteinander verbunden sind, und

   1.2 zwischen denen mindestens eine Kunststoffplatte sandwichartig eingeschlossen ist,

   1.3 die gleichmäßig über die Gesamtfläche verteilt durchgehende, beidseitig offene und von den Scheiben (1, 2) oder einer lichtdurchlässigen Kunststofffolie (8, 9) verschlossene Känale (10) mit im wesentlichen geradliniger Mittelachse aufweist,

dadurch gekennzeichnet,

   1.4 daß die Kunststoffplatte eine auf Verarbeitungsstärke zugeschnittene, an sich lichtundurchlässige geschlossenzellige Schaumstofftafel (3) ist,

   1.5 die durch die beidseitig offenen durchgehenden Känale (10) lichtdurchlässig gestaltet ist.

2. Verbundelement nach Anspruch 1, dadurch gekennzeichnet, daß die Kunstoffplatte eine aus farblosem oder weißem Hartschaumstoff bestehende Tafel (3) ist.

3. Verbundelement nach einem der Ansprüche 1 oder 2, dadurch gekennzeichnet, daß die Schaumstofftafel (3) aus einem Polymethacrylimid besteht.

4. Verbundelement nach einem der Ansprüche 1 bis 3, dadurch gekennzeichnet, daß die Innenwände der Kanäle (10) glatt und lichtreflektierend sind.

5. Verbundelement nach einem der Ansprüche 1 bis 4, dadurch gekennzeichnet, daß die Kanäle (10) im Querschnitt rund mit einem Durchmesser von 1 bis 10 mm sind und die schmalste Stegbreite zwischen jeweils benachbarten Kanälen ungefähr 0,5 bis 3 mm beträgt.

6. Verbundelemente nach einem der Ansprüche 1 bis 5, dadurch gekennzeichnet, daß die Kanäle (10) schräg zu den Hauptoberflächen der Schaumstofftafel (3) verlaufen.

7. Verbundelement nach einem der Ansprüche 1 bis 6, dadurch gekennzeichnet, daß die Schaumstofftafel (3) aus mehreren miteinander verbundenen Schaumstofftafelelementen (5, 6, 7) besteht, zwischen dene lichtdurchlässige Scheiben oder Folien (8, 9) sandwichartig eingefügt sind.

8. Verbundelement nach einem der Ansprüche 1 bis 7, dadurch gekennzeichnet, daß die Kanäle (10) Stanz- oder Bohrlöcher sind.

## Claims

1. Translucent heat-insulating composite unit consisting of

   1.1. two translucent disks (1, 2), which are parallel to each other and are connected with each other at their edges, and

   1.2. between which at least one resin plate is included sandwich like,

   1.3. said resin plate comprises channels (10), which are uniformly distributed over the whole surface of said resin plate and which are open at both sides while passing through said resin plate, said channels (10) are closed by said disks (1, 2) or a translucent resin film (8, 9) and comprise essentially rectilinear center lines,

characterized in

   1.4. that said resin plate is in itself a non-translucent board (3) of foamed material with closed cellular structure and cut to a size of the working thickness, and

   1.5. that said board (3) is made translucent by said open passing-through channels (10).

2. Composite unit according to claim 1, wherein said resin plate is a board (3) of colourless or white rigid expanded resin.

3. Composite unit according to claim 1 or 2, wherein said board (3) is made of a polymethacylimide.

4. Composite unit according to one of the claims 1 to 3, wherein the inner walls of said channels (10) are smooth and light reflective.

5. Composite unit according to one of the claims 1 to 4, wherein said channels (10) have round cross-sections with a diameter of 1 to 10 mm and the smallest landpath between adjacent channels (10) is about 0,5 to 3 mm.

6. Composite unit according to one of the claims 1 to 5, wherein said channels (10) are provided inclined to the main surfaces of said board (3).

7. Composite unit according to one of the claims 1 to 6, wherein said board (3) of foamed material consists of several foam-board elements (5, 6, 7) which are connected together and between which translucent disks or films (8, 9) are sandwiched.

8. Composite unit according to one of the claims 1 to 7, wherein said channels (10) are punching or drilling holes.

**Revendications**

1. Unité composite calorifuge et transparent comprenant :

1.1 deux carreaux (1, 2) transparents et parallèles dont les bords sont reliés entre deux, et

1.2 entre lesquels au moins une plaque en matière plastique est prise en sandwich,

1.3 qui comprend des canaux (10) traversiers et ouverts sur les deux côtés, ayant des axes centraux essentiellement rectilignes et répartis régulièrement sur la surface totale et fermés par les carreaux (1, 2) ou une feuille en matière plastique transparente,

caractérisé en ce que

1.4 la plaque en matière plastique est un panneau (3) en produit mousse, opaque, avec des cellules isolées et coupée à l'épaisseur d'utilisation,

1.5 qui est rendu transparent par les canaux traversiers, ouverts sur les deux côtés.

2. Unité composite selon la revendication 1, caractérisé en ce que la plaque en matière plastique est un panneau (3) en produit mousse durcie, blanche ou incolore.

3. Unité composite selon la revendication 1 ou 2, caractérisé en ce que le panneau (3) en produit mousse consiste en un polyméthacrylimide.

4. Unité composite selon l'une des revendications 1 à 3, caractérisé en ce que les parois internes des canaux (10) sont lisses et réfléchissantes de la lumière.

5. Unité composite selon l'une des revendications 1 à 4, caractérisé en ce que les canaux (10) sont circulaires en section transversale avec un diamètre de 1 à 10 mm et la plus étroite épaisseur de paroi entre des canaux voisins est d'environ 0,5 à 3 mm.

6. Unité composite selon l'une des revendications 1 à 5, caractérisé en ce que les canaux (10) sont inclinés par rapport aux surfaces principales du panneau (3) en produit mousse.

7. Unité composite selon l'une des revendications 1 à 6, caractérisé en ce que le panneau en produit mousse (3) consiste en plusieurs sous-panneaux en produit mousse (5, 6, 7) reliés les uns aux autres entre lesquels des carreaux ou feuilles transparentes (8, 9) sont insérés en sandwich.

8. Unité composite selon l'une des revendications 1 à 7, caractérisé en ce que les canaux (10) sont des trous poinçonnés ou forés.

FIG. 1